# EUROPEAN PATENT SPECIFICATION

(11) **EP 4 221 152 B1**
(45) Date of publication and mention of the grant of the patent: **03.06.2026**
(21) Application number: 22153532.1
(22) Date of filing: 26.01.2022
(51) Int. Cl.: H04L 67/51

(54) **METHOD, APPARATUS AND COMPUTER PROGRAM FOR P-CSCF DISCOVERY**
VERFAHREN, VORRICHTUNG UND COMPUTERPROGRAMM ZUR P-CSCF ENTDECKUNG
PROCÉDÉ, APPAREIL ET PROGRAMME INFORMATIQUE DE DÉCOUVERTE DE P-CSCF

(43) Date of publication of application: 02.08.2023
(73) Proprietor: Nokia Technologies Oy, 02610 Espoo (FI)
(72) Inventor: WON, Sung Hwan, Flower Mound, 75028 (US); LIEBHART, Rainer, 81476 Munich (DE); LEIS, Peter, 82377 Penzberg (DE)
(74) Representative: Page White Farrer

(56) References cited:
- "3rd Generation Partnership Project; Technical Specification Group Core Network and Terminals; Study on enhanced IP Multimedia Subsystem (IMS) to 5GC integration Phase 2; CT WG4 aspects (Release 17)", no. V17.0.0, 17 December 2021 (2021-12-17), pages 1 - 22, XP052083193, Retrieved from the Internet <URL:https://ftp.3gpp.org/Specs/archive/23_series/23.700-12/23700-12-h00.zip 23700-12-h00.docx> [retrieved on 20211217]
- "3rd Generation Partnership Project; Technical Specification Group Core Network and Terminals; Study on enhanced IP Multimedia Subsystem (IMS) to 5GC integration Phase 2; CT WG1 aspects (Release 17)", no. V2.0.0, 30 November 2021 (2021-11-30), pages 1 - 20, XP052082996, Retrieved from the Internet <URL:https://ftp.3gpp.org/Specs/archive/23_series/23.700-10/23700-10-200.zip 23700-10-200.docx> [retrieved on 20211130]
- "3rd Generation Partnership Project; Technical Specification Group Services and System Aspects; System architecture for the 5G System (5GS); Stage 2 (Release 17)", vol. SA WG2, no. V17.2.0, 24 September 2021 (2021-09-24), pages 1 - 542, XP052056728, Retrieved from the Internet <URL:https://ftp.3gpp.org/Specs/archive/23_series/23.501/23501-h20.zip 23501-h20.docx> [retrieved on 20210924]
- "3rd Generation Partnership Project; Technical Specification Group Services and System Aspects; Procedures for the 5G System (5GS); Stage 2 (Release 17)", vol. SA WG2, no. V17.2.0, 24 September 2021 (2021-09-24), pages 1 - 713, XP052056731, Retrieved from the Internet <URL:https://ftp.3gpp.org/Specs/archive/23_series/23.502/23502-h20.zip 23502-h20.docx> [retrieved on 20210924]

## Description

### Field

The present application relates to a method, apparatus, and computer program for a wireless communication system.

### Background

A communication system may be a facility that enables communication sessions between two or more entities such as user terminals, base stations/access points and/or other nodes by providing carriers between the various entities involved in the communications path. A communication system may be provided, for example, by means of a communication network and one or more compatible communication devices. The communication sessions may comprise, for example, communication of data for carrying communications such as voice, electronic mail (email), text message, multimedia and/or content data and so on. Non-limiting examples of services provided comprise two-way or multi-way calls, data communication or multimedia services and access to a data network system, such as the Internet.

"3^{rd} Generation Partnership Project; Technical Specification Group Core Network and Terminals; Study on enhanced IP Multimedia Subsystem (IMS) to 5GC integration Phase 2; CT WG4 (Release 17)", 3GPP TR 23.700-12, 17 December 2021, discusses P-CSCF discovery support with one slice connecting to multiple IMS network. A home network domain name of the UE home IMS network is taken into account when the SMF discovers P-CSCF. The SMF can be configured with P-CSCF addresses based on home network domain name granularity, or SMF includes home network domain name when querying NRF for P-CSCF instance. The SMF returns P-CSCF addresses to the UE accordingly.

"3rd Generation Partnership Project; Technical Specification Group Core Network and Terminals; Study on enhanced IP Multimedia Subsystem (IMS) to 5GC integration Phase 2; CT WG4 (Release 17)", 3GPP TR 23.700-10, 30 November 2021, discusses P-CSCF discovery support with one slice connecting to multiple IMS network. The IMS network domain information of the UE home IMS network or IMS service additional to DNN and S-NSSAI is provided to SMF and is taken in account during P-CSCF discovery.

"3rd Generation Partnership Project; Technical Specification Group Services and System Aspects; System architecture for the 5G System (5GS); Stage 2 (release 17)", 3GPP TS 23.501, 24 September 2021, discusses P-CSCF address delivery, wherein, at PDU session establishment related to IMS, the SMF shall support the capability to send the P-CSCF address to the UE.

"3rd Generation Partnership Project; Technical Specification Group Services and System Aspects; System architecture for the 5G System (5GS); Stage 2 (release 17)", 3GPP TS 23.502, 24 September 2021, discusses NF/NF service discovery by NF consumers in the same PLMN.

### Summary

The invention is defined by the appended independent claims. Particular embodiments are set out in the dependent claims.

### List of abbreviations:

- AF:: Application Function
- AMF:: Access Management Function
- AN:: Access Network
- APN:: Access Point Name
- BS:: Base Station
- CN:: Core Network
- CSCF:: Call Session Control Function
- DHCP:: Dynamic Host Configuration Protocol
- DL:: Downlink
- DN:: Data Network
- DNN:: Data Network Name
- eNB:: eNodeB
- FQDN:: Fully Qualified Domain Name
- gNB:: gNodeB
- GSMA:: GSM Association
- HPLMN:: Home Public Land Mobile Network
- IIoT:: Industrial Internet of Things
- IMS:: IP Multimedia Subsystem
- IP:: Internet Protocol
- ISH:: IMS Subscription Holder
- LTE:: Long Term Evolution
- NEF:: Network Exposure Function
- NG-RAN:: Next Generation Radio Access Network
- NF:: Network Function
- NR:: New Radio
- NRF:: Network Repository Function
- NW:: Network
- MS:: Mobile Station
- P-CSCF:: Proxy CSCF
- PCF: Policy Control Function
- PDU:: Protocol Data Unit
- PLMN:: Public Land Mobile Network
- RAN:: Radio Access Network
- RF:: Radio Frequency
- SDM:: Subscriber Data Management
- SM:: Session Management
- SMF:: Session Management Function
- SNPN:: Standalone Non-Public Network
- S-NSSAI:: Single Network Slice Assistance Information
- SUPI:: Subscription Permanent Identifier
- UE:: User Equipment
- UDR:: Unified Data Repository
- UDM:: Unified Data Management
- UL:: Uplink
- UPF:: User Plane Function
- VPLMN:: Visited Public Land Mobile Network
- 3GPP:: 3^{rd} Generation Partnership Project
- 5G:: 5^{th} Generation
- 5GC:: 5G Core network
- 5G-AN:: 5G Radio Access Network
- 5GS:: 5G System
- 5G SM:: 5G Session Management

### Description of Figures

Embodiments will now be described, by way of example only, with reference to the accompanying Figures in which:
Figure 1 shows a schematic representation of a 5G system;
Figure 2 shows a schematic representation of a control apparatus;
Figure 3 shows a schematic representation of a terminal;
Figure 4 shows a schematic representation of a two UEs/terminals connecting to separate IMS networks through one common 5GC network slice;
Figure 5 shows an example signalling diagram between a terminal and core network functions;
Figure 6 shows an example method flow diagram performed by a network entity;
Figure 7 shows another example method flow diagram performed by a network entity;
Figure 8 shows another example method flow diagram performed by a network entity; and
Figure 9 shows a schematic representation of a non-volatile memory medium storing instructions which when executed by a processor allow a processor to perform one or more of the steps of the method of Figures 6 to 8.

### Detailed description

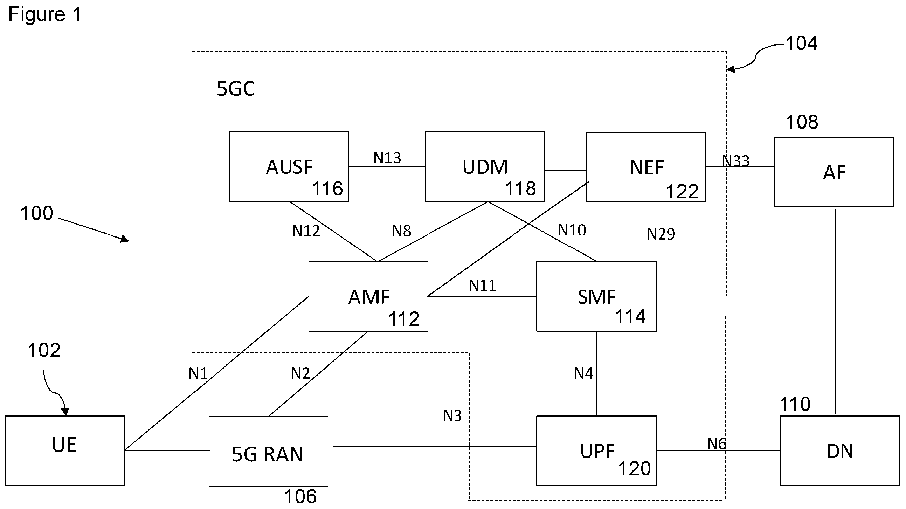

Before explaining in detail some examples of the present disclosure, certain general principles of a wireless communication system and mobile communication devices are briefly explained with reference to Figures 1 to 3 to assist in understanding the technology underlying the described examples.

In a wireless communication system 100, such as that shown in Figure 1, mobile communication devices/terminals or user apparatuses, and/or user equipments (UE), and/or machine-type communication devices 102 are provided wireless access via at least one base station (not shown) or similar wireless transmitting and/or receiving node or point. A communication device is provided with an appropriate signal receiving and transmitting apparatus for enabling communications, for example enabling access to a communication network or communications directly with other devices. The communication device may access a carrier provided by a station or access point, and transmit and/or receive communications on the carrier.

In the following certain examples are explained with reference to mobile communication devices capable of communication via a wireless cellular system and mobile communication systems serving such mobile communication devices. Before explaining in detail the examples of disclose, certain general principles of a wireless communication system, access systems thereof, and mobile communication devices are briefly explained with reference to Figures 1, 2 and 3 to assist in understanding the technology underlying the described examples.

Figure 1 shows a schematic representation of a 5G system (5GS) 100. The 5GS may comprises a device 102 such as user equipment or terminal, a 5G access network (5G-AN) 106, a 5G core network (5GC) 104, one or more network functions (NF), one or more application function (AF) 108 and one or more data networks (DN) 110.

The 5G-RAN 106 may comprise one or more gNodeB (gNB) distributed unit functions connected to one or more gNodeB (gNB) centralized unit functions.

The 5GC 104 may comprise an access management function (AMF) 112, a session management function (SMF) 114, an authentication server function (AUSF) 116, a user data management (UDM) 118, a user plane function (UPF) 120, a network exposure function (NEF) 122 and/or other NFs. Some of the examples as shown below may be applicable to 3GPP 5G standards. However, some examples may also be applicable to 4G, 3G and other 3GPP standards.

In a communication system, such as that shown in Figure 1, mobile communication devices/terminals or user apparatuses, and/or user equipments (UE), and/or machine-type communication devices are provided with wireless access via at least one base station or similar wireless transmitting and/or receiving node or point. The terminal is provided with an appropriate signal receiving and transmitting apparatus for enabling communications, for example enabling access to a communication network or communications directly with other devices. The communication device may access a carrier provided by a station or access point, and transmit and/or receive communications on the carrier.

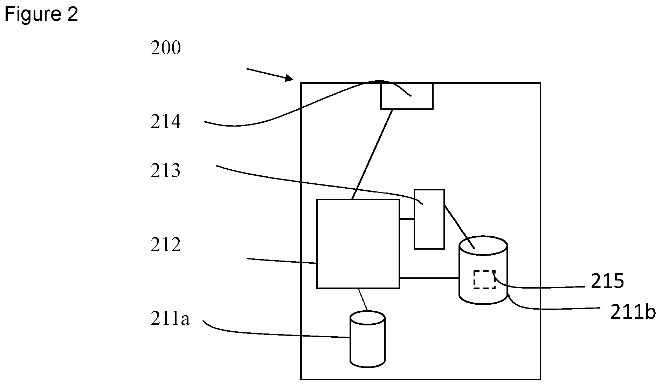

Figure 2 illustrates an example of a control apparatus 200 for controlling a function of the 5G-AN or the 5GC as illustrated on Figure 1. The control apparatus may comprise at least one random access memory (RAM) 211a, at least on read only memory (ROM) 211b, at least one processor 212, 213 and an input/output interface 214. The at least one processor 212, 213 may be coupled to the RAM 211a and the ROM 211b. The at least one processor 212, 213 may be configured to execute an appropriate software code 215. The software code 215 may for example allow to perform one or more steps to perform one or more of the present aspects. The software code 215 may be stored in the ROM 211b. The control apparatus 200 may be interconnected with another control apparatus 200 controlling another function of the 5G-AN or the 5GC. In some examples, each function of the 5G-AN or the 5GC comprises a control apparatus 200. In alternative examples, two or more functions of the 5G-AN or the 5GC may share a control apparatus.

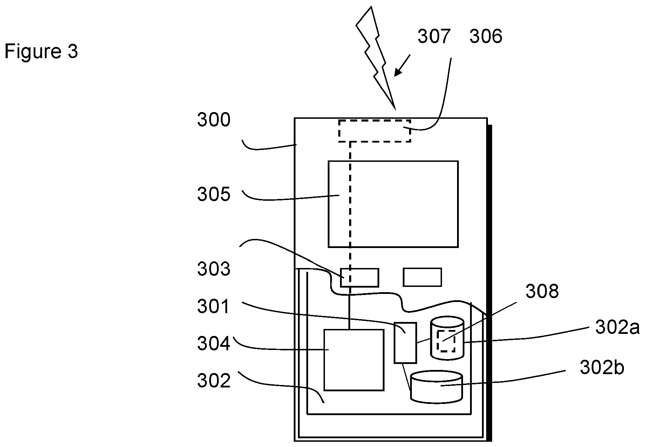

Figure 3 illustrates an example of a terminal 300, such as the terminal illustrated on Figure 1. The terminal 300 may be provided by any device capable of sending and receiving radio signals. Non-limiting examples comprise a user equipment, a mobile station (MS) or mobile device such as a mobile phone or what is known as a 'smart phone', a computer provided with a wireless interface card or other wireless interface facility (e.g., USB dongle), a personal data assistant (PDA) or a tablet provided with wireless communication capabilities, a machine-type communications (MTC) device, a Cellular Internet of things (CIoT) device or any combinations of these or the like. The terminal 300 may provide, for example, communication of data for carrying communications. The communications may be one or more of voice, electronic mail (email), text message, multimedia, data, machine data and so on.

The terminal 300 may receive signals over an air or radio interface 307 via appropriate apparatus for receiving and may transmit signals via appropriate apparatus for transmitting radio signals. In Figure 3 transceiver apparatus is designated schematically by block 306. The transceiver apparatus 306 may be provided for example by means of a radio part and associated antenna arrangement. The antenna arrangement may be arranged internally or externally to the mobile device.

The terminal 300 may be provided with at least one processor 301, at least one memory ROM 302a, at least one RAM 302b and other possible components 303 for use in software and hardware aided execution of tasks it is designed to perform, including control of access to and communications with access systems and other communication devices. The at least one processor 301 is coupled to the RAM 302a and the ROM 302a. The at least one processor 301 may be configured to execute an appropriate software code 308. The software code 308 may for example allow to perform one or more of the present aspects. The software code 308 may be stored in the ROM 302a.

The processor, storage and other relevant control apparatus may be provided on an appropriate circuit board and/or in chipsets. This feature is denoted by reference 304. The device may optionally have a user interface such as keypad 305, touch sensitive screen or pad, combinations thereof or the like. Optionally one or more of a display, a speaker and a microphone may be provided depending on the type of the device.

One or more of the following examples may relate to internet protocol (IP) multimedia subsystem, which is referred to as IMS. IMS refers to a standard for a telecommunication system which controls multimedia services accessing different networks. The IMS is based on an all-IP network. The IMS may be able to map and realise all communication services between the different parties during switching and transfer. IMS systems are primarily used in mobile networks. IMS systems may also be implemented in fixed-line networks.

Historically, mobile phones have provided voice call services over a circuit-switched-style network, rather than strictly over an IP packet-switched network. Alternative methods of delivering voice (VoIP) or other multimedia services have become available on smartphones, but they have not become standardized across the industry. IMS is an architectural framework that provides such standardization. IMS was originally designed by the wireless standards body 3rd Generation Partnership Project (3GPP), as a part of the vision for evolving mobile networks beyond GSM. Its original formulation (3GPP Rel-5) represented an approach for delivering Internet services over GPRS. This vision was later updated by 3GPP, 3GPP2 and ETSI TISPAN by requiring support of networks other than GPRS, such as Wireless LAN, CDMA2000 and fixed lines.

Some examples of standards that are based on IMS are MMTel which is the basis for voice over LTE (VoLTE), Wi-Fi calling (VoWIFI), video over LTE (ViLTE), SMS/MMS over WiFi and LTE, and rich communication services (RCS). RCS also further added Presence/EAB (enhanced address book) functionality.

In order to communicate with the IMS, a UE knows at least one IP address or FQDN of the proxy call session control function (P-CSCF). The mechanism by which the UE retrieves these addresses is called a "P-CSCF discovery".

The call session control function (CSCF) provides a central control function in the IMS Core Network, and is used to set up, establish, modify, and tear down multimedia sessions. The CSCF is distributed across three types of functional elements based on the function they perform. These three elements are the proxy CSCF (P-CSCF), the interrogating CSCF (I-CSCF), and the serving CSCF (S-CSCF).

The P-CSCF is an edge access function. The P-CSCF is an entry point for a terminal/UE to request services from an IMS network. The role of the P-CSCF is to function as a proxy by accepting incoming requests and forwarding them to the entity that can service them. The incoming requests are either the initial registration or an invitation for a multimedia session. A request for the UE to register for a service is forwarded to a session controller or to one with the capability to interrogate for it. Requests that are a session invitation are directed by the P-CSCF to a serving CSCF. The P-CSCF also maintains a secure association with the UE. The P-CSCF also provides for compression of SIP signalling to minimize latency for over the air interface.

The I-CSCF is responsible for determining which serving CSCF should be assigned for controlling the session requested by the UE. The I-CSCF obtains the request for the address of the S-CSCF from the Home Subscriber Server (HSS) during a registration request. The I-CSCF then provides it to the P-CSCF for subsequent multimedia requests.

The S-CSCF is responsible for conducting both registration and session control for the registered UE's sessions. The S-CSCF functions as a registrar and enables the network location information of the UE to be available at the HSS. The S-CSCF determines whether to allow or deny service to the UE. The S-CSCF enables the assignment of application servers to the session, if required. Its role is to execute the session request by locating the destination endpoint and conducting the signalling toward it. The serving CSCF is also able to coordinate with the media resource function for any media announcements/tones to be played to the originating party. Serving CSCFs maintain a full state of the sessions and have the capability to originate and terminate a session on behalf of a requesting endpoint.

All three CSCF functions may be responsible for generating the session details or the call detail records (CDRs). A typical network configuration may contain multiple instances of the CSCFs engineered to the appropriate traffic model.

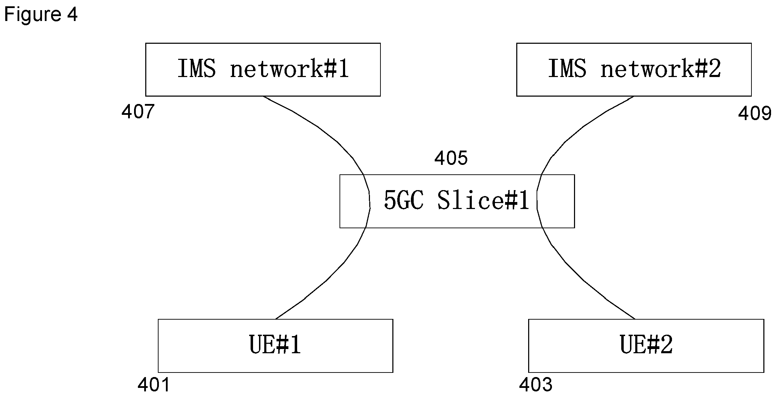

A problem that has been identified with IMS systems is how different UEs registered in the same network (e.g. public land mobile network (PLMN), standalone non-public network (SNPN)), or in the same slice of a network, can access different IMS networks. In particular, it is a problem as to how these UEs can be provided with addresses of P-CSCF(s) located in the different IMS networks. This problem has been identified in the context of an SNPN where the SNPN has contracts with several IMS subscription holder (ISH) networks which may be offering IMS services to the users of the SNPN. This problem is illustrated in Figure 4.

Figure 4 shows a schematic representation of a two UEs/terminals connecting to separate IMS networks through one common 5GC network slice. In the representation there is provided a first UE 401 and a second UE 403. The first and second UEs 401, 403 are in communication with a common 5GC network slice 405. The first UE 401 is connected to a first IMS network 407 via the 5GC network slice 405. The second UE 403 is connected to a second IMS network 409 via the 5GC network slice 405. In this way the 5GC network slice 405 is able to provide access to different IMS networks 407, 409 for each of two UEs 401, 403.

It has been investigated how an SMF in the 5GC network slice can discover an appropriate P-CSCF for UEs 401, 403. In Figure 4, for the first UE 401 and the second UE 403, an SMF in the common 5GC network slice 405 should select a P-CSCF in the first IMS network 407 and the second IMS network 409, respectively.

In previous systems, there have been proposed two solutions to try and address one or more of the problems identified above, which were incorporated in 3GPP TR 23.700-10.

In a first proposal, it was proposed that a UE provides IMS network domain information during the establishment of an IMS PDU session. In this solution, it is assumed that the first IMS network 407 and the second IMS network 409 are associated with the same domain network name (DNN).

In a second proposal, it was proposed that if multiple IMS networks can be accessed by the 5GC network slice 405, then an IMS DNN needs to include information identifying the corresponding IMS network similar to clause AB.1.2.3 of 3GPP TS 23.228.

However, both proposals described above have associated disadvantages.

For example, in the first proposal, this requires an enhancement to the 5G session management (SM) protocol. Therefore, this first proposal does not work for legacy UEs. For the second proposal, this requires that a different access point name (APN)/DNN is assigned for each of the IMS networks which can be accessed by a single 5GC network slice or 5GC network. Said another way, the operator name in the DNN identifies the IMS operator. Due to this requirement, IMS roaming using the concept of well-known IMS APN/DNN may not be supported. According to the Global System for Mobile Communications Association (GSMA) IR.88 the operator identifier in the APN/DNN fully qualified domain name (FQDN) is filled with the visited public land mobile network identity (PLMN ID) in a roaming case (not home routed) and with the home PLMN ID in the non-roaming case. Therefore, the second proposal may not be suitable with this commonly used concept.

One or more of the examples discussed below attempt to address one or more of the problems identified above.

To avoid backward compatibility issues with GSMA IR.88, one or more of the following examples use a subscriber data parameter/subscription data parameter which allows the network and the UE to determine the IMS network and the P-CSCF addresses and/or FQDNs to use, for IMS services. The subscriber data parameter/subscription data parameter may be referred to as an 'ISH parameter. In examples, the ISH parameter identifies one IMS network/domain. It should be understood that the naming as the 'ISH parameter' is an example only. In other examples, the parameter may have any suitable name.

In some examples, the ISH parameter may be the name of the IMS network holding the IMS subscription. For example, the ISH name as in 3GPP TS 23.228.

In other examples, the ISH parameter may be the P-CSCF addresses/FQDNs to be used for this subscriber.

In other examples, the ISH parameter may be another suitable new or existing parameter. For example, a 'special' single network slice assistance information (S-NSSAI) value, or an index identifying the IMS network, or one or more P-CSCFs.

In a non-roaming case/roaming case with home routed traffic/SNPN case, when the subscriber data is sent to the SMF, then the UDM provides the SMF with the subscriber data which includes the ISH parameter. The UDM may provide the subscriber data because the SMF invoked the Nudm_SDM_Get service operation. In response to receiving the subscriber data from the UDM, the SMF uses the ISH parameter, if present, to determine P-CSCF address(es)/FQDN(s). In response to the determination, the SMF will provide the determined P-CSCF address(es)/FQDN(s) to the UE in SM signalling.

In an example, the SMF may use the ISH name to construct P-CSCF address(es)/FQDN(s). In examples, the ISH parameter is a string/name such as *ims1.network.* The ISH parameter is then used to create the P-CSCF FQDN. For example, *pcscf.ims1.network.3gppnetwork.com*

In another example, the SMF may use a stored P-CSCF address(es)/FQDN(s) directly, using the ISH parameter. For example, if the UDM stores an index such as 1, 2, 3, then this index 'points' to one, or a set, of P-CSCF FQDNs stored in the SMF locally (or in the NRF).

In another example, the SMF may use the ISH name, S-NSSAI, index and/or other parameter used to query the NRF or other NF for P-CSCF address/FQDN. Alternatively, the SMF may map the parameter locally in SMF to P-CSCF address(es)/FQDN(s).

In examples when the ISH parameter is not present, the network constructs the IMS APN/DNN in the usual way as defined in TS 23.003 and GSMA IR.88 and determines P-CSCF address(es)/FQDN(s) which is then sent to the UE in SM signalling.

In a roaming case that is not home routed, if a visited network inter-connects with different IMS service provider networks (e.g., ISH), the visited network can select one of the IMS networks providing IMS roaming capability when a UE is connecting to the visited network. For example, a roaming case or the case where a UE connects to a non-subscribed SNPN.

The selection may be performed via an NRF and the selection may be based on i) the IMS network capabilities and ii) a home network of the UE. The home network of the UE may be the HPLMN ID or SNPN ID. In examples, the network capabilities includes whether IMS roaming is supported or not. In other examples, the selection may be performed by another suitable network function (NF), other than the NRF.

For example, the NRF (or other NF) may be queried by SMF with the HPLMN ID or the SNPN ID as an input parameter. The HPLMN ID and/or SNPN ID may be derived from a subscriber permanent identifier (SUPI). The SUPI is known to the SMF. In examples, a network operator allocates, to each subscriber identity modules (SIM) card a unique identifier, known in 4G as an IMSI (International Mobile Subscriber Identity) and in 5G as a SUPI. In other examples, the HPLMN ID/SNPN ID will be derived using an IMSI. The SNPN ID may refer to the identity of a subscribed SNPN or credentials holder.

In response to receiving the query from the SMF, the NRF (or other NF) will then reply to the SMF with P-CSCF address(es)/FQDN(s) from an IMS network that allows inter-connection with the IMS network(s) providing multimedia services for this HPLMN and SNPN.

In other cases, the visited network constructs the IMS APN/DNN in the usual way (as defined in TS 23.003 and GSMA IR.88) and determines P-CSCF address(es)/FQDN(s) which is then sent to the UE in SM signalling.

As described in, in some examples, a new subscription parameter (so-called ISH parameter) is introduced, which may be used to select IMS networks. In an example, if the new subscription data parameter is indicating the IMS service provider name to be used, the new subscription data parameter can be stored in the UDM, for each DNN, in the per S-NSSAI level subscription data part. For example, the SM subscription data part of Table 5.2.3.3.1-1 of 3GPP TS 23.502 can be changed as follows (wherein the new subscription parameter is underlined).

**Table 1: Modified version of Table 5.2.3.3.1-1 from 3GPP TS 23.502**

| | | |
|---|---|---|
| SM subscription data (data needed for PDU session establishment) | GPSI List | List of the GPSI (Generic Public Subscription Identifier) used both inside and outside of the 3GPP system to address a 3GPP subscription. |
| | Internal Group ID-list | List of the subscribed internal group(s) that the UE belongs to. |
| | Trace Requirements | Trace requirements about a UE (e.g. trace reference, address of the Trace Collection Entity, etc...) is defined in TS 32.421 [39]. |
| | | This information is only sent to a SMF in the HPLMN or one of its equivalent PLMN(s). |
| | **Session Management Subscription data contains one or more S-NSSAI level subscription data:** | |
| | S-NSSAI | Indicates the value of the S-NSSAI. |
| | Subscribed DNN list | List of the subscribed DNNs for the S-NSSAI (NOTE 1). |
| | **For each DNN in S-NSSAI level subscription data:** | |
| | DNN | **DNN** for the PDU Session. |
| | Framed Route information | Set of Framed Routes. A Framed Route refers to a range of IPv4 addresses / IPv6 Prefixes to associate with a PDU Session established on this (DNN, S-NSSAI). |
| | | See NOTE 4. |
| | IP Index information | Information used for selecting how the UE IP address is to be allocated (see clause 5.8.2.2.1 in TS 23.501 [2]). |
| | Allowed PDU Session Types | Indicates the allowed PDU Session Types (IPv4, IPv6, IPv4v6, Ethernet, and Unstructured) for the DNN, S-NSSAI. See NOTE 6. |
| | Default PDU Session Type | Indicates the default PDU Session Type for the DNN, S-NSSAI. |
| | Allowed SSC modes | Indicates the allowed SSC modes for the DNN, S-NSSAI. |
| | Default SSC mode | Indicate the default SSC mode for the DNN, S-NSSAI. |
| | Interworking with EPS indication | Indicates whether interworking with EPS is supported for this DNN and S-NSSAI. |
| | 5GS Subscribed QoS profile | The QoS Flow level QoS parameter values (5QI and ARP) for the DNN, S-NSSAI (see clause 5.7.2.7 of TS 23.501 [2]). |
| | Charging Characteristics | It contains Charging Characteristics as defined in Annex A clause A.1 of TS 32.255 [45]. This information, when provided, shall override any corresponding predefined information at the SMF. |
| | Subscribed-Session-AMBR | The maximum aggregated uplink and downlink MBRs to be shared across all Non-GBR QoS Flows in each PDU Session, which are established for the DNN, S-NSSAI. |
| | Static IP address/prefix | Indicate the static IP address/prefix for the DNN, S-NSSAI. |
| | User Plane Security Policy | Indicates the security policy for integrity protection and encryption for the user plane. |
| | PDU Session continuity at inter RAT mobility | Provides for this DNN, S-NSSAI how to handle a PDU Session when UE the moves to or from NB-IoT. Possible values are: maintain the PDU session; disconnect the PDU session with a reactivation request; disconnect PDU session without reactivation request; or to leave it to local VPLMN policy. |
| | NEF Identity for NIDD | When present, indicates, per S-NSSAI and per DNN, the identity of the NEF to anchor Unstructured PDU Session. When not present for the S-NSSAI and DNN, the PDU session terminates in UPF (see NOTE 8). |
| | NIDD information | Information such as External Group Identifier, External Identifier, MSISDN, or AF ID used for SMF-NEF Connection. |
| | SMF-Associated Expected UE Behaviour parameters | Parameters on expected characteristics of a PDU Session their corresponding validity times as specified in clause 4.15.6.3. |
| | Suggested number of downlink packets | Parameters on expected PDU session characteristics as specified in clauses 4.15.3.2.3b and 4.15.6.3a. |
| | ATSSS information | Indicates whether MA PDU session establishment is allowed. |
| | Secondary authentication indication | Indicates that whether the Secondary authentication/authorization (as defined in clause 5.6 of TS 23.501 [2]) is required for PDU Session Establishment as specified in clause 4.3.2.3. |
| | DN-AAA server UE IP address allocation indication | Indicates that whether the SMF is required to request the UE IP address from the DN-AAA server (as defined in clause 5.6 of TS 23.501 [2]) for PDU Session Establishment as specified in clause 4.3.2.3. |
| | DN-AAA server addressing information | If at least one of secondary DN-AAA authentication, DN-AAA authorization or DN-AAA UE IP address allocation is required by subscription data, the subscription data may also contain DN-AAA server addressing information. |
| | Edge Configuration Server Address Configuration Information | Consists of one or more FQDN(s) and/or IP Address(es) of Edge Configuration Server(s) as defined in clause 6.5.2 of TS 23.548 [74]. |
| | IMS subscription holder network domain name | Indicates the domain name of an IMS network if the DNN and S-NSSAI can be used to access multiple IMS networks. |

In examples, when an *Nudm_SDM_Get* service operation is invoked by an SMF, a UDM can provide subscription data including the ISH parameter to the SMF. The SMF may then perform a P-CSCF discovery process. The P-CSCF discovery process may comprise querying an NRF, wherein the query includes the ISH parameter. The NRF may then respond to the SMF with identities of one or more P-CSCFs. The NRF may utilise the received ISH parameter when providing the available identities of P-CSCFs to the SMF.

The *Nudm_SDM_Get* service operation is used when a consumer NF gets the subscriber data indicated by the subscription data type input from the UDM. The UDM checks that the requested consumer is authorized to get the specific subscription data requested. In the case where the NF consumer is SMF, the subscriber data may contain, for example, an allowed PDU session type, an allowed session and service continuity (SSC) mode, and/or default 5G QoS identifier (5QI)/allocation and retention Priority (ARP).
When there has been a change in the ISH parameter, the UDM can indicate this change to the SMF by invoking the *Nudm_SDM_Notification* service operation. The UDM can provide the updated ISH parameter to the SMF. The SMF may then perform a further P-CSCF discovery process. The SMF may query the NRF, providing the updated parameter in addition to information on the current P-CSCF. If a different P-CSCF needs to be selected, the SMF may release/modify the PDU session. The SMF may release/modify the PDU session by requesting the UE to reactivate/re-establish the PDU session. The UE will then establish a new PDU session in response to receiving the requested reactivation from the SMF.

In examples, if the IMS subscription holder network domain name is associated with a new pair of S-NSSAI and DNN, the SMF may release the PDU session by requesting the UE to reactivate the PDU session, while indicating the new DNN and S-NSSAI pair to the UE. Following this, the UE establishes a new PDU session indicating the new DNN and S-NSSAI.

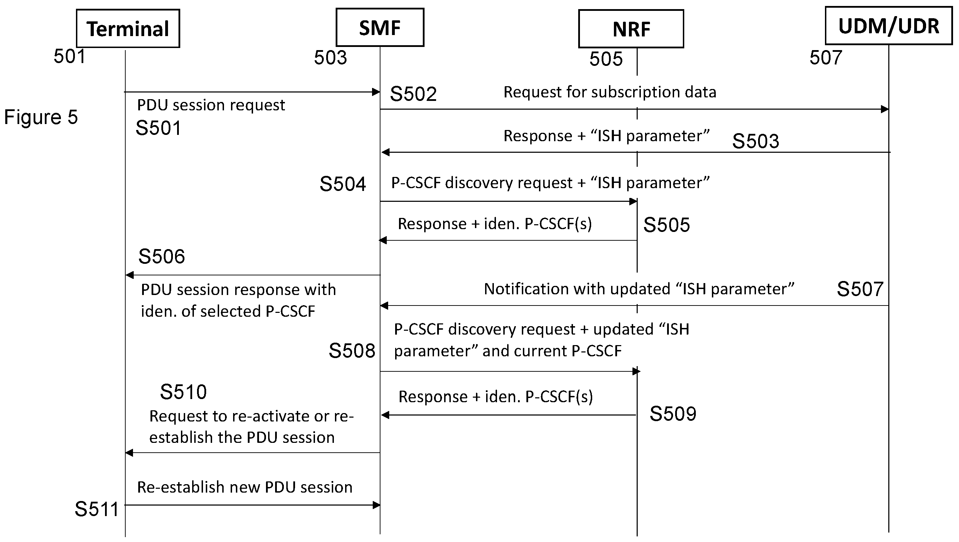

This will be described in more detail below, alongside Figure 5.

Figure 5 shows an example signalling diagram between a terminal and core network functions. In Figure 5, the communications occur between a terminal 501 (or user equipment), an SMF 503, an NRF 505, and a UDM 507 (or UDR).

In S501, the terminal 501 provides a PDU session establishment request message to the SMF 503. As part of the request, the terminal may request access to an IMS network. It should be understood that, in some examples, the PDU session establishment request is not provided directly to the SMF 503 by the terminal 501.

In S502, the SMF 503 provides a request for subscription data associated with the terminal to the UDM 507. The SUPI associated with the terminal may be provided as an input parameter for the request. In examples, the SMF 503 may invoke the *Nudm_SDM_Get* service operation in order to make the request to the UDM 507.

In S503, the UDM 507 provides a response message to the SMF 503, wherein the response message comprises an ISH parameter. The ISH parameter identifying an IMS network. In examples, the response message from the UDM 507 to the SMF 503 is part of the *Nudm_SDM_Get* service operation.

In S504, the SMF 503 initiates a P-CSCF discovery process. The SMF 503 provides a P-CSCF discovery request to the NRF 505, wherein the request includes the received ISH parameter.

In examples, one or more of the following factors may be considered during the P-CSCF discovery and selection: S-NSSAI of the PDU Session, UE location information, local operator policies, availability of candidate P-CSCFs and their capabilities, UE IP address, access type, proximity to location of selected UPF, selected DNN.

In S505, the NRF 505 uses the received ISH parameter to determine identities of one or more available P-CSCFs. The NRF 505 then provides a response message to the SMF 503, wherein the response message comprises the identities of the one or more P-CSCFs that are available. Each P-CSCF may be associated with an IMS network. In examples, as the identification, the NRF 505 provides the IP address or the FQDN of the available P-CSCF, to the SMF 503.

In other examples, the P-CSCF discovery process performed by the SMF does not include the NRF query steps. In these examples, the ISH parameter is used by the SMF to determine the identities of the available P-CSCFs locally.

In S506, the SMF 503 provides a PDU session response message to the UE 501. The identities of the one or more P-CSCFs are provided in the response message. The identity may be an IP address of the P-CSCF. In other examples, the identities of the one or more P-CSCFs are provided in response to a dynamic host configuration protocol (DHCP) request message from the terminal.

In examples when a plurality of identities of P-CSCFs are provided to the terminal, the terminal may determine which P-CSCF (IMS network) to use.

In S507, there is a change in the ISH parameter. In response to the change, the UDM 507 provides a notification message to the SMF 503, the notification message comprising an updated ISH parameter. In examples, the UDM 507 indicates this change to the SMF 503 by invoking the *Nudm_SDM_Notification* service operation.

In S508, the SMF 503 initiates a P-CSCF discovery process. The SMF 503 provides a P-CSCF discovery request to the NRF 505, wherein the request comprises the updated ISH parameter. In some examples, the request also comprises the identity of the current P-CSCF (i.e. the selected P-CSCF from S505).

In S509, the NRF 505 uses the updated ISH parameter to determine one or more available P-CSCFs. The NRF 505 then provides a response message to the SMF 503, wherein the response message comprises identities of the one or more P-CSCFs that are available. In examples, as the identity, the NRF 505 provides the IP address or the FQDN of available P-CSCF instances to the SMF 503.

In other examples, rather than querying the NRF 505, the SMF 503 uses the updated ISH parameter to determine identities of one or more P-CSCFs.

In some examples, the same P-CSCFs will be provided to/determined by the SMF 503 in S505 and S509. In other examples, different P-CSCFs are provided to/determined by the SMF 503.

In S510, when a different P-CSCF is selected, the SMF 503 releases/modifies the PDU session with the terminal 501. The SMF 503 releases/modifies the PDU session by requesting the terminal 501 to reactivate/re-establish the PDU session. The message to the terminal 501 may comprise identities of the one or more updated P-CSCFs. In examples, the IP addresses of the updated P-CSCFs are provided.

In S511, the terminal 501 then establish a new PDU session with the network, in response to receiving the requested reactivation/re-establishment message from the SMF 503.

In examples, when the ISH network domain name is associated with a new pair of S-NSSAI and DNN, the SMF 503 can release the PDU session by requesting the terminal 501 to reactivate the PDU session, while indicating the new DNN and S-NSSAI to the terminal 501. In response to this, the terminal 501 establishes a new PDU session indicating the new DNN and S-NSSAI.

Therefore, one or more of the examples above allow two terminals/UEs to connect to separate IMS networks through a common 5GC network slice. This means that different terminals/UEs that are registered in the same network can access different IMS networks (through the associated P-CSCF instances). Furthermore, the above process is also applicable for legacy UEs, and also supports one IMS APN/DNN.

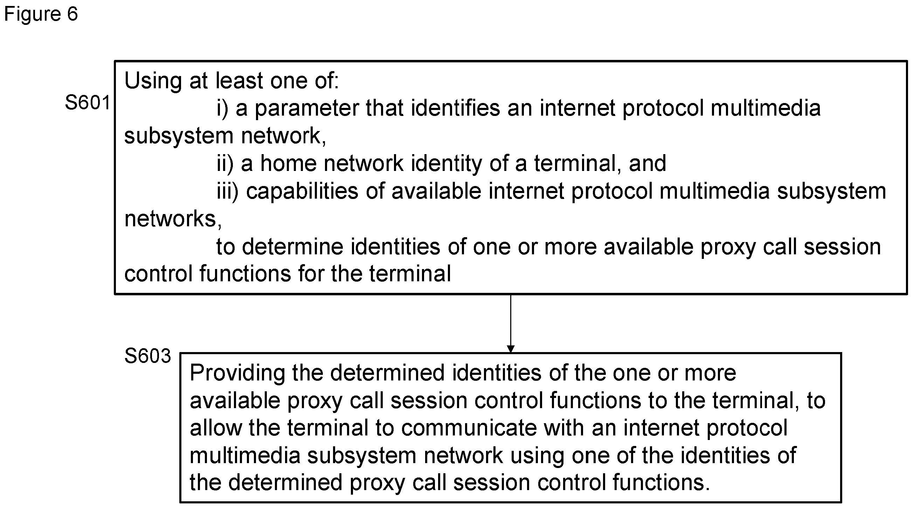

Figure 6 shows an example method flow performed by an apparatus. The apparatus may be comprised within a first core network function. In an example, the first core network function may be an SMF.

In S601, the method comprises using at least one of: a parameter that identifies an internet protocol multimedia subsystem network, a home network identity of a terminal, and capabilities of available internet protocol multimedia subsystem networks, to determine identities of one or more available proxy call session control functions for the terminal.

In S603, the method comprises providing the determined identities of the one or more available proxy call session control functions to the terminal, to allow the terminal to communicate with an internet protocol multimedia subsystem network using one of the identities of the determined proxy call session control functions.

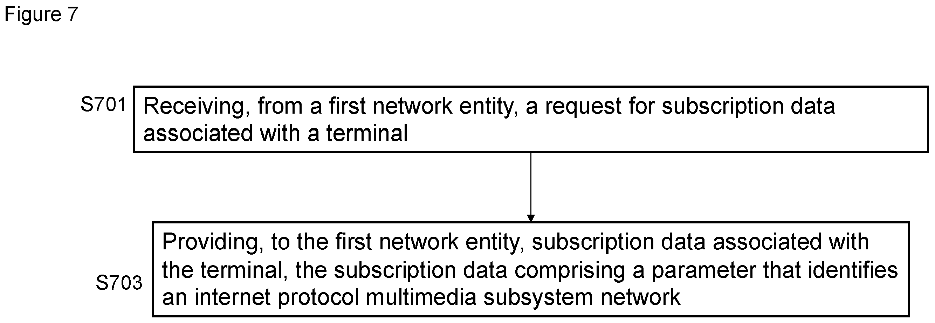

Figure 7 shows an example method flow performed by an apparatus. The apparatus may be comprised within a second core network function. In an example, the apparatus may be comprised within a UDM. In an example, the apparatus may be comprised within a UDR.

In S701, the method comprises receiving, from a first network entity, a request for subscription data associated with a terminal.

In S703, the method comprises providing, to the first network entity, subscription data associated with the terminal, the subscription data comprising a parameter that identifies an internet protocol multimedia subsystem network.

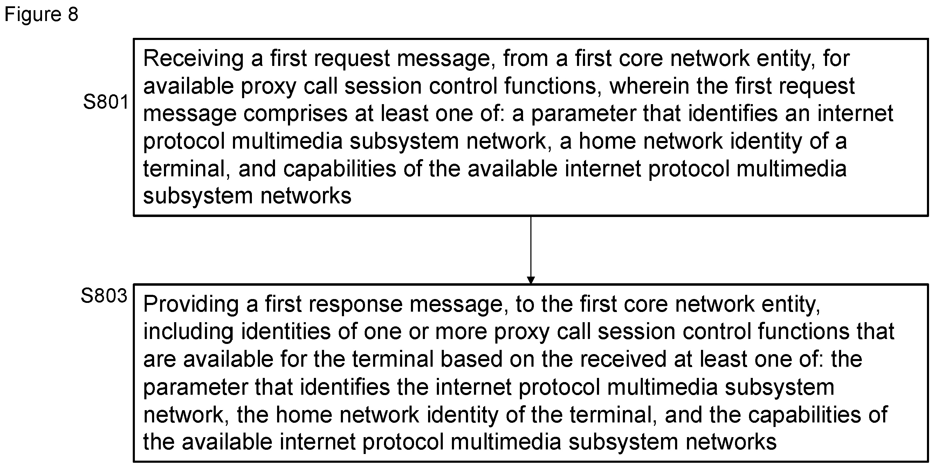

Figure 8 shows an example method flow performed by an apparatus. The apparatus may be comprised within a third core network function. In an example, the apparatus may be comprised within an NRF.

In S801 the method comprises receiving a first request message, from a first core network entity, for available proxy call session control functions, wherein the first request message comprises at least one of: a parameter that identifies an internet protocol multimedia subsystem network, a home network identity of a terminal, and capabilities of the available internet protocol multimedia subsystem networks.

In S803 the method comprises providing a first response message, to the first core network entity, including identities of one or more proxy call session control functions that are available for the terminal based on the received at least one of: the parameter that identifies the internet protocol multimedia subsystem network, the home network identity of the terminal, and the capabilities of the available internet protocol multimedia subsystem networks.

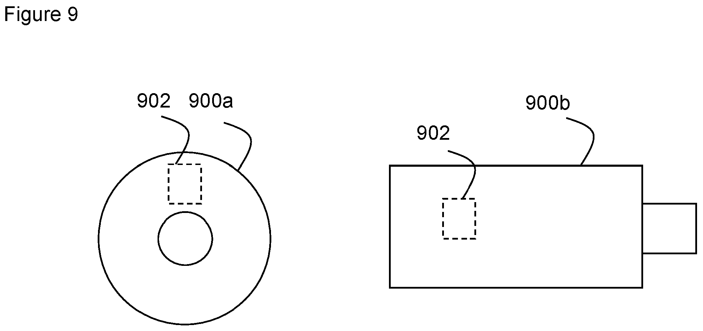

Figure 9 shows a schematic representation of non-volatile memory media 900a (e.g. computer disc (CD) or digital versatile disc (DVD)) and 900b (e.g. universal serial bus (USB) memory stick) storing instructions and/or parameters 902 which when executed by a processor allow the processor to perform one or more of the steps of the methods of Figure 6, Figure 7 and/or Figure 8.

It is noted that while the above describes example embodiments, there are several variations and modifications which may be made to the disclosed solution without departing from the scope of the present invention.

The examples may thus vary within the scope of the attached claims. In general, some embodiments may be implemented in hardware or special purpose circuits, software, logic or any combination thereof. For example, some aspects may be implemented in hardware, while other aspects may be implemented in firmware or software which may be executed by a controller, microprocessor or other computing device, although embodiments are not limited thereto. While various embodiments may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The examples may be implemented by computer software stored in a memory and executable by at least one data processor of the involved entities or by hardware, or by a combination of software and hardware. Further in this regard it should be noted that any procedures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multi core processor architecture, as non-limiting examples.

Alternatively, or additionally some examples may be implemented using circuitry. The circuitry may be configured to perform one or more of the functions and/or method steps previously described. That circuitry may be provided in the base station and/or in the communications device.

As used in this application, the term "circuitry" may refer to one or more or all of the following:
(a) hardware-only circuit implementations (such as implementations in only analogue and/or digital circuitry);
(b) combinations of hardware circuits and software, such as:
   (i) a combination of analogue and/or digital hardware circuit(s) with software/firmware and
   (ii) any portions of hardware processor(s) with software (including digital signal processor(s)), software, and memory(ies) that work together to cause an apparatus, such as the communications device or base station to perform the various functions previously described; and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example integrated device.

The foregoing description has provided by way of exemplary and non-limiting examples a full and informative description of some embodiments. However, various modifications and adaptations may become apparent to those skilled in the relevant arts in view of the foregoing description, when read in conjunction with the accompanying drawings and the appended claims. However, all such and similar modifications of the teachings will still fall within the scope as defined in the appended claims.

## Claims

1. A first core network entity (503) comprising means for:
providing (S504) a first request message, to a third core network entity, for available proxy call session control functions, wherein the first request message comprises at least one of:
a parameter comprised in subscription data associated with a terminal, the parameter identifying an internet protocol multimedia subsystem network;
a home network identity of the terminal; or
capabilities of the internet protocol multimedia subsystem networks that are available;
receiving (S505) a first response message, from the third core network entity, including identities of one or more proxy call session control functions that are available for the terminal based on the at least one of: the parameter, the home network identity of the terminal, or the capabilities of the internet protocol multimedia subsystem networks that are available;
providing (S506) the identities of the one or more available proxy call session control functions to the terminal;
receiving (S507) a notification from a second core network entity, wherein the notification comprises information for updating the parameter comprised in the subscription data;
in response to receiving the information for updating the parameter:
providing (S508) a second request message, to the third core network entity, for available proxy call session control functions, wherein the second request message comprises the parameter updated with the information and the identities of the one or more available proxy call session control functions provided to the terminal; and
receiving (S509) a second response message to the second request message, from the third core network entity, including identities of one or more proxy call session control function instances that are available for the terminal;
determining an updated proxy call session control function to be used by the terminal, the updated proxy call session control function determined using the identities of one or more proxy call session control function instances that are available for the terminal included in the second response message; and
when the updated proxy call session control function is different to the one or more proxy call session control functions, providing (S510) a third message to the terminal, the third message requesting the terminal to re-activate or re-establish a protocol data unit session,
wherein the third message comprises an identity of the updated proxy call session control function,
wherein the first core network entity is a session management function, the second core network entity is a unified data management or a unified data repository, and the third core network entity is a network repository function.

2. The first core network entity according to claim 1, wherein the means are for:
receiving (S503), from the second core network entity, the subscription data associated with the terminal, the subscription data comprising the parameter.

3. The first core network entity according to claim 1 or claim 2, wherein the parameter comprises at least one of:
a domain name of an internet protocol multimedia subsystem network storing an internet protocol multimedia subsystem subscription;
identities of one or more proxy call session control functions to be used by the terminal;
a single network slice assistance information value;
an index identifying: the internet protocol multimedia subsystem network, or one or more proxy call session control functions.

4. The first core network entity according to claim 2, wherein the means are for:
before receiving the subscription data, providing (S502) a subscription data request message, to the second core network entity, for subscription data associated with the terminal.

5. The first core network entity according to any of claims 1 to 4, wherein the identities of the one or more available proxy call session control functions are provided to the terminal in: a session establishment response message, or a response to a dynamic host configuration protocol request.

6. The first core network entity according to any of claims 1 to 5, wherein the means are for:
obtaining a subscriber permanent identifier of the terminal; and
determining the home network identity of the terminal using the subscriber permanent identifier of the terminal.

7. The first core network entity according to any of claims 1 to 6, wherein the capabilities of available internet protocol multimedia subsystem networks are: locally configured at the first core network function, or fetched from a further network function, and
wherein the capabilities of available internet protocol multimedia subsystem networks networks comprise: a capability for supporting internet protocol multimedia subsystem networks roaming.

8. A method performed by a first core network entity (503), the method comprising:
providing (S504) a first request message, to a third core network entity, for available proxy call session control functions, wherein the first request message comprises at least one of:
a parameter comprised in subscription data associated with a terminal, the parameter identifying an internet protocol multimedia subsystem network;
a home network identity of the terminal; or
capabilities of the internet protocol multimedia subsystem networks that are available;
receiving (S505) a first response message, from the third core network entity, including identities of one or more proxy call session control functions that are available for the terminal based on the at least one of: the parameter, the home network identity of the terminal, or the capabilities of the internet protocol multimedia subsystem networks that are available;
providing (S506) the identities of the one or more available proxy call session control functions to the terminal;
receiving (S507) a notification from a second core network entity, wherein the notification comprises information for updating the parameter comprised in the subscription data;
in response to receiving the information for updating the parameter:
providing (S508) a second request message, to the third core network entity, for available proxy call session control functions, wherein the second request message comprises the parameter updated with the information and the identities of the one or more available proxy call session control functions provided to the terminal; and
receiving (S509) a second response message to the second request message, from the third core network entity, including identities of one or more proxy call session control function instances that are available for the terminal;
determining an updated proxy call session control function to be used by the terminal, the updated proxy call session control function determined using the identities of one or more proxy call session control function instances that are available for the terminal included in the second response message; and
when the updated proxy call session control function is different to the one or more proxy call session control functions, providing (S510) a third message to the terminal, the third message requesting the terminal to re-activate or re-establish a protocol data unit session,
wherein the third message comprises an identity of the updated proxy call session control function,
wherein the first core network entity is a session management function, the second core network entity is a unified data management or a unified data repository, and the third core network entity is a network repository function.

9. The method according to claim 8, further comprising:
receiving (S503), from the second core network entity, the subscription data associated with the terminal, the subscription data comprising the parameter.

10. The method according to claim 8 or claim 9, wherein the parameter comprises at least one of:
a domain name of an internet protocol multimedia subsystem network storing an internet protocol multimedia subsystem subscription;
identities of one or more proxy call session control functions to be used by the terminal;
a single network slice assistance information value;
an index identifying: the internet protocol multimedia subsystem network, or one or more proxy call session control functions.

11. The method according to claim 9, further comprising:
before receiving the subscription data, providing (S502) a subscription data request message, to the second core network entity, for subscription data associated with the terminal.

12. The method according to any of claims 8 to 11, wherein the identities of the one or more available proxy call session control functions are provided to the terminal in: a session establishment response message, or a response to a dynamic host configuration protocol request.

13. The method according to any of claims 8 to 12, further comprising:
obtaining a subscriber permanent identifier of the terminal; and
determining the home network identity of the terminal using the subscriber permanent identifier of the terminal.

14. The method according to any of claims 8 to 13, wherein the capabilities of available internet protocol multimedia subsystem networks are: locally configured at the first core network function, or fetched from a further network function, and
wherein the capabilities of available internet protocol multimedia subsystem networks comprise: a capability for supporting internet protocol multimedia subsystem networks roaming.

15. A computer program comprising computer executable instructions which when executed by one or more processors perform the method of any of claims 8 to 14.

## Patentansprüche

1. Erste Kernnetzwerkentität (503), die Mittel für Folgendes umfasst:
Bereitstellen (S504) einer ersten Nachricht zur Anforderung von verfügbaren Proxyanrufsitzungssteuerfunktionen für eine dritte Kernnetzwerkentität, wobei die erste Anforderungsnachricht mindestens eines von Folgendem umfasst:
einem Parameter, der in Subskriptionsdaten umfasst ist, die mit einem Endgerät verknüpft sind, wobei der Parameter ein Internetprotokollmultimediauntersystemnetzwerk identifiziert;
einer Heimnetzwerkidentität des Endgeräts; oder
Fähigkeiten des Internetprotokollmultimediauntersystemnetzwerks, die verfügbar sind;
Empfangen (S505) einer ersten Antwortnachricht von der dritten Kernnetzwerkentität, die Identitäten von einer oder mehreren Proxyanrufsitzungssteuerfunktionen beinhaltet, die auf Basis von mindestens einem von Folgendem für das Endgerät verfügbar sind: dem Parameter, der Heimnetzwerkidentität des Endgeräts oder den Fähigkeiten des Internetprotokollmultimediauntersystemnetzwerks, die verfügbar sind;
Bereitstellen (S506) der Identitäten der einen oder der mehreren verfügbaren Proxyanrufsitzungssteuerfunktionen für das Endgerät;
Empfangen (S507) einer Benachrichtigung von einer zweiten Kernnetzwerkentität, wobei die Benachrichtigung Informationen zum Aktualisieren des Parameters umfasst, der in den Subskriptionsdaten umfasst ist;
in Reaktion auf das Empfangen der Informationen zum Aktualisieren des Parameters:
Bereitstellen (S508) einer zweiten Nachricht zur Anforderung von verfügbaren Proxyanrufsitzungssteuerfunktionen für die dritte Kernnetzwerkentität, wobei die zweite Anforderungsnachricht den mit den Informationen aktualisierten Parameter und die Identitäten der dem Endgerät bereitgestellten einen oder mehreren verfügbaren Proxyanrufsitzungssteuerfunktionen umfasst; und
Empfangen (S509) einer zweiten Antwortnachricht auf die zweite Anforderungsnachricht von der dritten Kernnetzwerkentität, die Identitäten von einer oder mehreren Proxyanrufsitzungssteuerfunktionsinstanzen beinhaltet, die für das Endgerät verfügbar sind;
Bestimmen einer aktualisierten Proxyanrufsitzungssteuerfunktion, die vom Endgerät zu verwenden ist, wobei die bestimmte aktualisierte Proxyanrufsitzungssteuerfunktion die Identitäten von einer oder mehreren Proxyanrufsitzungssteuerfunktionsinstanzen verwendet, die für das Endgerät verfügbar und in der zweiten Antwortnachricht beinhaltet sind; und
wenn sich die aktualisierte Proxyanrufsitzungssteuerfunktion von der einen oder mehreren Proxyanrufsitzungssteuerfunktionen unterscheidet, Bereitstellen (S510) einer dritten Nachricht für das Endgerät, wobei die dritte Nachricht anfordert, dass das Endgerät eine Protokolldateneinheitssitzung erneut zu aktiviert oder neu einrichtet,
wobei die dritte Nachricht eine Identität der aktualisierten Proxyanrufsitzungssteuerfunktion umfasst,
wobei die erste Kernnetzwerkentität eine Sitzungsverwaltungsfunktion ist, die zweite Kernnetzwerkentität eine vereinheitlichte Datenverwaltung oder ein vereinheitlichtes Datenrepositorium ist und die dritte Kernnetzwerkentität eine Netzwerkrepositoriumsfunktion ist.

2. Erste Kernnetzwerkentität nach Anspruch 1, wobei die Mittel Folgendem dienen:
Empfangen (S503) der mit dem Endgerät verknüpften Subskriptionsdaten von der zweiten Kernnetzwerkentität, wobei die Subskriptionsdaten den Parameter umfassen.

3. Erste Kernnetzwerkentität nach Anspruch 1 oder Anspruch 2, wobei der Parameter mindestens eines von Folgendem umfasst:
einem Domänennamen eines Internetprotokollmultimediauntersystemnetzwerks, in dem eine Internetprotokollmultimediauntersystemsubskription gespeichert ist;
Identitäten von einer oder mehreren Proxyanrufsitzungssteuerfunktionen, die vom Endgerät zu verwenden sind;
einem eizelnen Wert von Netzwerksliceunterstützungsinformationen;
einem Index, der Folgendes identifiziert: das Internetprotokollmultimediauntersystemnetzwerk oder eine oder mehrere Proxyanrufsitzungssteuerfunktionen.

4. Erste Kernnetzwerkentität nach Anspruch 2, wobei die Mittel Folgendem dienen:
vor dem Empfangen der Subskriptionsdaten Bereitstellen (S502) einer Subskriptionsdatenanforderungsnachricht für Subskriptionsdaten, die mit dem Endgerät verknüpft sind, für die zweite Kernnetzwerkentität.

5. Erste Kernnetzwerkentität nach einem der Ansprüche 1 bis 4, wobei die Identitäten der einen oder der mehreren verfügbaren Proxyanrufsitzungssteuerfunktionen dem Endgerät in Folgendem bereitgestellt werden: einer Sitzungseinrichtungsantwortnachricht oder einer Antwort auf eine dynamische Hostauslegungsprotokollanforderung.

6. Erste Kernnetzwerkentität nach einem der Ansprüche 1 bis 5, wobei die Mittel Folgendem dienen:
Erhalten einer permanenten Subskribientenkennung des Endgeräts; und
Bestimmen der Heimnetzwerkidentität des Endgeräts unter Verwendung der permanenten Subskribientenkennung des Endgeräts.

7. Erste Kernnetzwerkentität nach einem der Ansprüche 1 bis 6, wobei die Fähigkeiten von verfügbaren Internetprotokollmultimediauntersystemnetzwerken Folgendes sind: lokal an der ersten Kernnetzwerkfunktion ausgelegt oder von einer weiteren Netzwerkfunktion abgerufen, und
wobei die Fähigkeiten von verfügbaren Internetprotokollmultimediauntersystemnetzwerken Netzwerken Folgendes umfassen: eine Fähigkeit zum Unterstützen des Roaming in Internetprotokollmultimediauntersystemnetzwerken.

8. Verfahren, das von einer ersten Kernnetzwerkentität (503) durchgeführt wird, wobei das Verfahren Folgendes umfasst:
Bereitstellen (S504) einer ersten Nachricht zur Anforderung von verfügbaren Proxyanrufsitzungssteuerfunktionen für eine dritte Kernnetzwerkentität, wobei die erste Anforderungsnachricht mindestens eines von Folgendem umfasst:
einem Parameter, der in Subskriptionsdaten umfasst ist, die mit einem Endgerät verknüpft sind, wobei der Parameter ein Internetprotokollmultimediauntersystemnetzwerk identifiziert;
einer Heimnetzwerkidentität des Endgeräts; oder
Fähigkeiten des Internetprotokollmultimediauntersystemnetzwerks, die verfügbar sind;
Empfangen (S505) einer ersten Antwortnachricht von der dritten Kernnetzwerkentität, die Identitäten von einer oder mehreren Proxyanrufsitzungssteuerfunktionen beinhaltet, die auf Basis von mindestens einem von Folgendem für das Endgerät verfügbar sind: dem Parameter, der Heimnetzwerkidentität des Endgeräts oder den Fähigkeiten des Internetprotokollmultimediauntersystemnetzwerks, die verfügbar sind;
Bereitstellen (S506) der Identitäten der einen oder der mehreren verfügbaren Proxyanrufsitzungssteuerfunktionen für das Endgerät;
Empfangen (S507) einer Benachrichtigung von einer zweiten Kernnetzwerkentität, wobei die Benachrichtigung Informationen zum Aktualisieren des Parameters umfasst, der in den Subskriptionsdaten umfasst ist;
in Reaktion auf das Empfangen der Informationen zum Aktualisieren des Parameters:
Bereitstellen (S508) einer zweiten Nachricht zur Anforderung von verfügbaren Proxyanrufsitzungssteuerfunktionen für die dritte Kernnetzwerkentität, wobei die zweite Anforderungsnachricht den mit den Informationen aktualisierten Parameter und die Identitäten der dem Endgerät bereitgestellten einen oder mehreren verfügbaren Proxyanrufsitzungssteuerfunktionen umfasst; und
Empfangen (S509) einer zweiten Antwortnachricht auf die zweite Anforderungsnachricht von der dritten Kernnetzwerkentität, die Identitäten von einer oder mehreren Proxyanrufsitzungssteuerfunktionsinstanzen beinhaltet, die für das Endgerät verfügbar sind;
Bestimmen einer aktualisierten Proxyanrufsitzungssteuerfunktion, die vom Endgerät zu verwenden ist, wobei die bestimmte aktualisierte Proxyanrufsitzungssteuerfunktion die Identitäten von einer oder mehreren Proxyanrufsitzungssteuerfunktionsinstanzen verwendet, die für das Endgerät verfügbar und in der zweiten Antwortnachricht beinhaltet sind; und
wenn sich die aktualisierte Proxyanrufsitzungssteuerfunktion von der einen oder mehreren Proxyanrufsitzungssteuerfunktionen unterscheidet, Bereitstellen (S510) einer dritten Nachricht für das Endgerät, wobei die dritte Nachricht anfordert, dass das Endgerät eine Protokolldateneinheitssitzung erneut zu aktiviert oder neu einrichtet,
wobei die dritte Nachricht eine Identität der aktualisierten Proxyanrufsitzungssteuerfunktion umfasst,
wobei die erste Kernnetzwerkentität eine Sitzungsverwaltungsfunktion ist, die zweite Kernnetzwerkentität eine vereinheitlichte Datenverwaltung oder ein vereinheitlichtes Datenrepositorium ist und die dritte Kernnetzwerkentität eine Netzwerkrepositoriumsfunktion ist.

9. Verfahren nach Anspruch 8, das ferner Folgendes umfasst:
Empfangen (S503) der mit dem Endgerät verknüpften Subskriptionsdaten von der zweiten Kernnetzwerkentität, wobei die Subskriptionsdaten den Parameter umfassen.

10. Verfahren nach Anspruch 8 oder Anspruch 9, wobei der Parameter mindestens eines von Folgendem umfasst:
einem Domänennamen eines Internetprotokollmultimediauntersystemnetzwerks, in dem eine Internetprotokollmultimediauntersystemsubskription gespeichert ist;
Identitäten von einer oder mehreren Proxyanrufsitzungssteuerfunktionen, die vom Endgerät zu verwenden sind;
einem eizelnen Wert von Netzwerksliceunterstützungsinformationen;
einem Index, der Folgendes identifiziert: das Internetprotokollmultimediauntersystemnetzwerk oder eine oder mehrere Proxyanrufsitzungssteuerfunktionen.

11. Verfahren nach Anspruch 9, das ferner Folgendes umfasst:
vor dem Empfangen der Subskriptionsdaten Bereitstellen (S502) einer Subskriptionsdatenanforderungsnachricht für Subskriptionsdaten, die mit dem Endgerät verknüpft sind, für die zweite Kernnetzwerkentität.

12. Verfahren nach einem der Ansprüche 8 bis 11, wobei die Identitäten der einen oder der mehreren verfügbaren Proxyanrufsitzungssteuerfunktionen dem Endgerät in Folgendem bereitgestellt werden: einer Sitzungseinrichtungsantwortnachricht oder einer Antwort auf eine dynamische Hostauslegungsprotokollanforderung.

13. Verfahren nach einem der Ansprüche 8 bis 12, das ferner Folgendes umfasst:
Erhalten einer permanenten Subskribientenkennung des Endgeräts; und
Bestimmen der Heimnetzwerkidentität des Endgeräts unter Verwendung der permanenten Subskribientenkennung des Endgeräts.

14. Verfahren nach einem der Ansprüche 8 bis 13, wobei die Fähigkeiten von verfügbaren Internetprotokollmultimediauntersystemnetzwerken Folgendes sind: lokal an der ersten Kernnetzwerkfunktion ausgelegt oder von einer weiteren Netzwerkfunktion abgerufen, und
wobei die Fähigkeiten von verfügbaren Internetprotokollmultimediauntersystemnetzwerken Folgendes umfassen: eine Fähigkeit zum Unterstützen des Roaming in Internetprotokollmultimediauntersystemnetzwerken.

15. Computerprogramm, das computerausführbare Anweisungen umfasst, die, wenn sie von einem oder mehreren Prozessoren ausgeführt werden, das Verfahren von einem der Ansprüche 8 bis 14 durchführen.

## Revendications

1. Première entité de réseau central (503) comprenant des moyens pour :
fournir (S504) à une troisième entité de réseau central un premier message de demande concernant des fonctions de contrôle de session d'appel de mandataire disponibles, dans laquelle le premier message de demande comprend au moins un parmi :
un paramètre compris dans des données d'abonnement associées à un terminal, le paramètre identifiant un réseau de sous-système multimédia de protocole Internet ;
une identité de réseau domestique du terminal ; ou
des capacités des réseaux de sous-système multimédia de protocole Internet qui sont disponibles ;
recevoir (S505) de la troisième entité de réseau central un premier message de réponse comportant des identités d'une ou plusieurs fonctions de contrôle de session d'appel de mandataire qui sont disponibles pour le terminal sur la base de l'au moins un parmi : le paramètre, l'identité de réseau domestique du terminal ou les capacités des réseaux de sous-système multimédia de protocole Internet qui sont disponibles ;
fournir (S506) au terminal les identités des une ou plusieurs fonctions de contrôle de session d'appel de mandataire disponibles ;
recevoir (S507) une notification d'une deuxième entité de réseau central, dans laquelle la notification comprend des informations pour mettre à jour le paramètre compris dans les données d'abonnement ;
en réponse à la réception des informations pour mettre à jour le paramètre :
fournir (S508) à la troisième entité de réseau central un deuxième message de demande concernant des fonctions de contrôle de session d'appel de mandataire disponibles, dans laquelle le deuxième message de demande comprend le paramètre mis à jour avec les informations et les identités des une ou plusieurs fonctions de contrôle de session d'appel de mandataire disponibles fournies au terminal ; et
recevoir (S509) de la troisième entité de réseau central un deuxième message de réponse au deuxième message de demande comportant des identités d'une ou plusieurs instances de fonction de contrôle de session d'appel de mandataire qui sont disponibles pour le terminal ;
déterminer une fonction de contrôle de session d'appel de mandataire mise à jour à utiliser par le terminal, la fonction de contrôle de session d'appel de mandataire mise à jour étant déterminée en utilisant les identités d'une ou plusieurs instances de fonction de contrôle de session d'appel de mandataire qui sont disponibles pour le terminal incluses dans le deuxième message de réponse ; et
lorsque la fonction de contrôle de session d'appel de mandataire mise à jour est différente des une ou plusieurs fonctions de contrôle de session d'appel de mandataire, fournir (S510) un troisième message au terminal, le troisième message demandant au terminal de réactiver ou de rétablir une session d'unité de données de protocole,
dans laquelle le troisième message comprend une identité de la fonction de contrôle de session d'appel de mandataire mise à jour,
dans laquelle la première entité de réseau central est une fonction de gestion de session, la deuxième entité de réseau central est une gestion de données unifiée ou un référentiel de données unifié, et la troisième entité de réseau central est une fonction de référentiel de réseau.

2. Première entité de réseau central selon la revendication 1, dans laquelle les moyens sont destinés à :
recevoir (S503) de la deuxième entité de réseau central les données d'abonnement associées au terminal, les données d'abonnement comprenant le paramètre.

3. Première entité de réseau central selon la revendication 1 ou la revendication 2, dans laquelle le paramètre comprend au moins un parmi :
un nom de domaine d'un réseau de sous-système multimédia de protocole Internet stockant un abonnement de sous-système multimédia de protocole Internet ;
des identités d'une ou plusieurs fonctions de contrôle de session d'appel de mandataire à utiliser par le terminal ;
une seule valeur d'informations d'assistance de tranche de réseau ;
un indice identifiant : le réseau de sous-système multimédia de protocole Internet, ou une ou plusieurs fonctions de contrôle de session d'appel de mandataire.

4. Première entité de réseau central selon la revendication 2, dans laquelle les moyens sont destinés à :
avant de recevoir les données d'abonnement, fournir (S502) à la deuxième entité de réseau central un message de demande de données d'abonnement concernant des données d'abonnement associées au terminal.

5. Première entité de réseau central selon l'une des revendications 1 à 4, dans laquelle les identités des une ou plusieurs fonctions de contrôle de session d'appel de mandataire disponibles sont fournies au terminal dans : un message de réponse d'établissement de session, ou une réponse à une demande de protocole de configuration d'hôte dynamique.

6. Première entité de réseau central selon l'une des revendications 1 à 5, dans laquelle les moyens sont destinés à :
obtenir un identifiant permanent d'abonné du terminal ; et
déterminer l'identité de réseau domestique du terminal en utilisant l'identifiant permanent d'abonné du terminal.

7. Première entité de réseau central selon l'une des revendications 1 à 6, dans laquelle les capacités de réseaux de sous-système multimédia de protocole Internet disponibles sont : configurées localement au niveau de la première fonction de réseau central, ou récupérées à partir d'une autre fonction de réseau, et
dans laquelle les capacités de réseaux de sous-système multimédia de protocole Internet disponibles comprennent : une capacité de prise en charge d'une itinérance de réseaux de sous-système multimédia de protocole Internet.

8. Procédé réalisé par une première entité de réseau central (503), le procédé comprenant les étapes suivantes :
fournir (S504) à une troisième entité de réseau central un premier message de demande concernant des fonctions de contrôle de session d'appel de mandataire disponibles, dans lequel le premier message de demande comprend au moins un parmi :
un paramètre compris dans des données d'abonnement associées à un terminal, le paramètre identifiant un réseau de sous-système multimédia de protocole Internet ;
une identité de réseau domestique du terminal ; ou
des capacités des réseaux de sous-système multimédia de protocole Internet qui sont disponibles ;
recevoir (S505) de la troisième entité de réseau central un premier message de réponse comportant des identités d'une ou plusieurs fonctions de contrôle de session d'appel de mandataire qui sont disponibles pour le terminal sur la base de l'au moins un parmi : le paramètre, l'identité de réseau domestique du terminal ou les capacités des réseaux de sous-système multimédia de protocole Internet qui sont disponibles ;
fournir (S506) au terminal les identités des une ou plusieurs fonctions de contrôle de session d'appel de mandataire disponibles ;
recevoir (S507) une notification d'une deuxième entité de réseau central, dans lequel la notification comprend des informations pour mettre à jour le paramètre compris dans les données d'abonnement ;
en réponse à la réception des informations pour mettre à jour le paramètre :
fournir (S508) à la troisième entité de réseau central un deuxième message de demande concernant des fonctions de contrôle de session d'appel de mandataire disponibles, dans lequel le deuxième message de demande comprend le paramètre mis à jour avec les informations et les identités des une ou plusieurs fonctions de contrôle de session d'appel de mandataire disponibles fournies au terminal ; et
recevoir (S509) de la troisième entité de réseau central un deuxième message de réponse au deuxième message de demande comportant des identités d'une ou plusieurs instances de fonction de contrôle de session d'appel de mandataire qui sont disponibles pour le terminal ;
déterminer une fonction de contrôle de session d'appel de mandataire mise à jour à utiliser par le terminal, la fonction de contrôle de session d'appel de mandataire mise à jour étant déterminée en utilisant les identités d'une ou plusieurs instances de fonction de contrôle de session d'appel de mandataire qui sont disponibles pour le terminal incluses dans le deuxième message de réponse ; et
lorsque la fonction de contrôle de session d'appel de mandataire mise à jour est différente des une ou plusieurs fonctions de contrôle de session d'appel de mandataire, fournir (S510) un troisième message au terminal, le troisième message demandant au terminal de réactiver ou de rétablir une session d'unité de données de protocole,
dans lequel le troisième message comprend une identité de la fonction de contrôle de session d'appel de mandataire mise à jour,
dans lequel la première entité de réseau central est une fonction de gestion de session, la deuxième entité de réseau central est une gestion de données unifiée ou un référentiel de données unifié, et la troisième entité de réseau central est une fonction de référentiel de réseau.

9. Procédé selon la revendication 8, comprenant en outre l'étape suivante :
recevoir (S503) de la deuxième entité de réseau central les données d'abonnement associées au terminal, les données d'abonnement comprenant le paramètre.

10. Procédé selon la revendication 8 ou la revendication 9, dans lequel le paramètre comprend au moins un parmi :
un nom de domaine d'un réseau de sous-système multimédia de protocole Internet stockant un abonnement de sous-système multimédia de protocole Internet ;
des identités d'une ou plusieurs fonctions de contrôle de session d'appel de mandataire à utiliser par le terminal ;
une seule valeur d'informations d'assistance de tranche de réseau ;
un indice identifiant : le réseau de sous-système multimédia de protocole Internet, ou une ou plusieurs fonctions de contrôle de session d'appel de mandataire.

11. Procédé selon la revendication 9, comprenant en outre l'étape suivante :
avant de recevoir les données d'abonnement, fournir (S502) à la deuxième entité de réseau central un message de demande de données d'abonnement concernant des données d'abonnement associées au terminal.

12. Procédé selon l'une des revendications 8 à 11, dans lequel les identités des une ou plusieurs fonctions de contrôle de session d'appel de mandataire disponibles sont fournies au terminal dans : un message de réponse d'établissement de session, ou une réponse à une demande de protocole de configuration d'hôte dynamique.

13. Procédé selon l'une des revendications 8 à 12, comprenant en outre les étapes suivantes :
obtenir un identifiant permanent d'abonné du terminal ; et
déterminer l'identité de réseau domestique du terminal en utilisant l'identifiant permanent d'abonné du terminal.

14. Procédé selon l'une des revendications 8 à 13, dans lequel les capacités de réseaux de sous-système multimédia de protocole Internet disponibles sont : configurées localement au niveau de la première fonction de réseau central, ou récupérées à partir d'une autre fonction de réseau, et
dans lequel les capacités de réseaux de sous-système multimédia de protocole Internet disponibles comprennent : une capacité de prise en charge d'une itinérance de réseaux de sous-système multimédia de protocole Internet.

15. Programme informatique comprenant des instructions exécutables par ordinateur qui, lorsqu'elles sont exécutées par un ou plusieurs processeurs, réalisent le procédé de l'une des revendications 8 à 14.
